# EUROPEAN PATENT APPLICATION

(11) **EP 0 971 106 A2**
(43) Date of publication of application: **12.01.2000**
(21) Application number: 99305308.1
(22) Date of filing: 05.07.1999
(51) Int. Cl.: F02B 19/02

(54) **Prechamber gas-combustion engine with gaseous fuel compressor**

(30) Priority: 08.07.1998 JP 19337698; 08.07.1998 JP 19341498
(71) Applicant: ISUZU CERAMICS RESEARCH INSTITUTE CO., LTD., Fujisawa-shi, Kanagawa-ken (JP)
(72) Inventor: Kawamura, Hideo, Kanagawa-ken 253-0105 (JP)
(74) Representative: Jenkins, Peter David

(57) **Abstract**

Disclosed a prechamber gas-combustion engine in which gaseous fuel to be injected into auxiliary chambers(2) is boosted in compression chambers(8) where pistons(15) pressurize the gaseous fuel, whereby the high-pressure gaseous fuel is reliably sprayed out into the auxiliary chambers(2). The gaseous fuel is applied to the compression chambers(21) by the use of a rotary pump(28) that is absolutely void of contaminating lubricating oils. The prechamber gas-combustion engine has pistons(15) formed therein with the auxiliary chambers(2) and a cylinder head(3) including combustion chamber(10) walls formed therein with compression chambers(21). Fuel-injection nozzles(5) extend out of the combustion chamber walls(10) and are provided with fuel-discharge orifices(16), which may open to the auxiliary chambers(2) in the pistons(15) nearby top dead center of the piston(15). The gaseous fuel fed in the compression chambers(8) is booted in pressure by compression pistons(21), which are operated under the action of a valve-actuating mechanism.

## Description

The present invention relates to a gas-combustion engine with a precombustion chamber into which are injected the gaseous fuels boosted to a high pressure by a compressor, and in which the combustion of the injected fuels is initiated.

Conventionally lean-burn gas engines have been developed in order to gain high efficiency with less NOx emissions. In the lean-burn gas engines, there is an engine system operating on Otto-cycle in which a gas mixer is arranged in an air intake line or an indirect injection system having a prechamber in which the gaseous fuels are charged and burned therein.

An example of the gas-combustion engines is disclosed in Japanese Patent Laid-Open No. 310550/1995, in which a gaseous fuel such as natural gas, H₂ or the like is introduced into a prechamber while the intake air is compressed only in a piston-cylinder main chamber to a high compression ratio. The cylinder pressure in the prechamber is monitored with a pressure sensor and a fuel-supply valve is actuated in accordance with the information reported from the pressure sensor to thereby control the quantity of the fuel to be supplied in compliance with the engine rpm and the engine load. The air heated to high temperature by compression in the main chamber is admitted into the prechamber through an opened valve in a communicating path whereby the gaseous fuel is mixed turbulently with the admitted air to promote rapid combustion.

On the other hand, most prior vane pumps having vanes rotating in a fixed casing consume much output of the engine or motor to operate the pump owing to the frictional resistance of the moving vanes, which are thrown radially outwards against the fixed casing. To deal with the large power loss as described above, it has been proposed to provide a hard ceramic coating on the outermost ends of the vanes, which is chiefly composed of chromium and nitrogen. The ceramic coating is to make less the coefficient of kinetic friction of the vanes against the inner curved surface of the casing. The prior vane pump is disclosed in, for example, Japanese Patent Laid-Open No. 310675/1995.

Vacuum pumps used in vehicle and rotary pumps incorporated in the compressors for natural gases must be, in some cases, necessarily kept from the contamination of lubricating oil into the gases. The lubricating oil got mixed with the gaseous fuel changes HC or the like and, therefore, it is usually required to use no lubricating oil for lubrication of pumps. For instance, the lubricating oil mixed with the natural gas at the compressor causes the gas-combustion engine to generate HC or the like in the exhaust gases owing to burning of the lubricating oil, resulting in a source of environmental pollution. In addition, the intake air got mixed with lubricating oil makes worse the engine operating conditions. In consequence, it is preferred to use no lubricating oil for the rotary pumps. Nevertheless, such no lubricating oil causes much wear at the relatively sliding surfaces of the rotary sliding parts. This results in the remarkable reduction in durability of the rotary parts.

In the meantime polyethylene fluoride is commonly used for wide industrial applications because of low-frictional property as well as no absorption of liquid. It has been well known that fibrous polyethylene fluoride is not only superior in abrasion resistance, but also less in coefficient of friction. In contrast, as well known to those skilled in the art, ceramics are great in hardness and superior in abrasion resistance. However ceramics-to-ceramics sliding contact becomes large in coefficient of friction and, therefore, much subject to wear, resulting in generating excessive abrasion.

In the gas-combustion engine with the prechamber, a control valve is arranged substantially nearby the center of a cylinder in a communicating port between a main chamber and a connected auxiliary chamber. The control valve remains blocking the communicating port whenever a piston is moving to draw air into the main chamber through an intake valve, while during which a gaseous fuel-supply valve is opened to permit the gaseous fuel entering in the auxiliary chamber or prechamber. The control valve opens the communicating port late in the compression stroke to thereby permit the compressed air rushing through the communicating port into the prechamber, where rapid mixing of fuel in air and combustion takes place. The burning mixture in the prechamber then issues into the main chamber, where any remaining fuel is subjected to the secondary combustion and burned.

Nevertheless the prechamber gas-combustion engine as described just above is very hard to achieve the homogeneous mixture of fuel in air to help ensure the high thermal efficiency of the engine. On burning the fuel of natural gas in the prechamber gas-combustion engines, the natural gas is sprayed into the prechamber under low pressure and, then, air higher in molecular weight than the fuel is forced under high pressure from the main chamber into the prechamber through the communicating port, which is opened by the control valve. In the above process, the fuel is hard to get mixed with the air because of the difference in specific gravity from each other. Consequently, any unburned gaseous fuel is driven into any local area in the prechamber, with remaining in the prechamber. This makes worse the burning conditions, causes the failure of the optimum combustion, thereby resulting in lowering the thermal efficiency and increasing the generation of HC.

Moreover, as burning the natural gas requires air of from 9 to 9.5 times as much as the natural gas, it is preferred to burn the natural gas with much air around the natural gas. In the prior prechamber gas-combustion engine as described above, nevertheless, it may be considered that the dispersion of the natural gas in the air is too thorough for continuing burning the natural gas. Now investigating the mixing of gaseous fuel in air in the prechamber from the viewpoint of their physical properties, the natural gas is chiefly composed of CH₄ having the molecular weight of 16, whereas air has the molecular weight of 29. With the compressed air being injected into the prechamber at the instant the communicating port is opened, the air compressed up to the pressure of from 40 to 50 bars is forced into the prechamber, where the air expands rapidly to fill inside the prechamber. Owing to this, the phenomenon may happen such that any gaseous fuel does not get mixed with the air, but confined within an inner part, or the upper area, of the prechamber.

As an alternative, it may be considered to make large a ratio of the volume in the prechamber to the total volume in the main chamber at the end of the compression stroke to thereby permit more air entering into the prechamber. However, this causes excessively increasing the pressure in the main chamber before opening the communicating port and the control valve thus requires the great effort to lift off the communicating port, which might not be overcome by the commonly used lift mechanism energized with, for example, electromagnetic power.

Accordingly it is expected to develop an improved prechamber gas-combustion engine in which the gaseous fuel is sprayed into compressed much air in the prechamber, where firing and combustion take place, thereby making the fuel mix homogeneously in the compressed air, and then the burning mixture blows out into the main chamber with no residual fuel trapped in the prechamber, so that the flames of burning mixture as well as any unburned gaseous mixture are rapidly jetted out into the main chamber at the early stage of combustion, thereby resulting in improving the thermal efficiency with the reduction of HC emissions or the like.

The present invention has for its primary aim to overcome the problems as described above and more particular provide a prechamber gas-combustion engine in which auxiliary chambers are provided at piston heads, each for each head, and gaseous fuels compressed by gaseous fuel-compressing means are sprayed out of fuel-injection nozzles into highly pressurized air in the auxiliary chambers thereby keeping the gaseous fuel from being urged against nearby inner wall surfaces of the auxiliary chambers by the action of pressurized air admitted into the auxiliary chamber, while firing and combustion take place in the auxiliary chamber and then flames of the burning mixture and gases of the unburned mixture are jetted out into main chambers with no residual gaseous fuel remaining in the auxiliary chambers, whereby the thermal efficiency is improved with suppressing generation of emissions of HC, NOx, soot or the like. Moreover, the present invention intends to provide a prechamber gas-combustion engine in which the gaseous fuel-compressing means is composed of a rotary pump that uses no lubricating oil thereby eliminating contamination of the lubricating oil in the compressed gaseous fuel, with resulting in preventing generation of HC emissions or the like.

The present invention is concerned with a prechamber gas-combustion engine comprising combustion chamber members arranged in a cylinder head so as to constitute main chambers, pistons movable reciprocally in cylinders and formed with auxiliary chambers communicating with the main chambers, communicating ports provided between the main and auxiliary chambers, fuel-injection nozzles extending out of the combustion chamber walls and having fuel-discharge orifices that are exposed through holes of the pistons into the auxiliary chambers near top dead center of the piston, compression chambers formed at nozzle bodies of the fuel-injection nozzles to store therein and compress gaseous fuels charged, gaseous fuel-supply means for charging the gaseous fuels into the compression chambers, compression pistons for compressing the gaseous fuel charged into the compression chambers, and actuating means for forcing the compression pistons.

In one aspect of the present invention, a prechamber gas-combustion engine is disclosed wherein the actuating means for forcing the compression pistons are each comprised of a cam mounted on a camshaft of a valve-operating mechanism, a piston rod operated under the action of the cam, and a return spring for restoring the piston rod to its home position.

In another aspect of the present invention, a prechamber gas-combustion engine is disclosed wherein the compression pistons are each provided therein with return paths communicating the associated compression chamber with a cavity formed on the back of the compression piston, the return paths each containing therein a check valve that opens the associated return path to recover the gaseous fuel, which has leaked out into the cavity, to the compression chamber.

In another aspect of the present invention, a prechamber gas-combustion engine is disclosed wherein the compression pistons are each provided therein with a fuel path communicating with the gaseous fuel-supply means to thereby making it possible to supply the gaseous fuel during the compression piston is moving downward.

In another aspect of the present invention, a prechamber gas-combustion engine is disclosed wherein the nozzle bodies each include a radially enlarged cylindrical section in which the associated compression piston slides back and forth, and a radially reduced tubular section in which a needle valve moves back and forth.

In another aspect of the present invention, a prechamber gas-combustion engine is disclosed wherein the radially reduced sections of the nozzle bodies are each provided with a valve seat against which a valve face of the associated needle valve seats, and a distal end formed with the fuel-discharge orifices that penetrate into the associated auxiliary chamber.

In another aspect of the present invention, a prechamber gas-combustion engine is disclosed wherein the needle valves in the fuel-injection nozzles each lift against an elastic force in response to a higher gaseous fuel pressure in the associated compression chamber than a preselected pressure.

In a further another aspect of the present invention, a prechamber gas-combustion engine is disclosed wherein the needle valves in the fuel-injection nozzles are each provided at its one end with the valve face to block off a fuel passage to the fuel-discharge orifices and at the opposite end thereof with an extension that extends through a hole in the compression piston and a recess in the piston rod forcing the compression piston so as to make a sliding motion under the elastic action of a spring.

In another aspect of the present invention a prechamber gas-combustion engine is disclosed wherein the gaseous fuel-supply means each include a gaseous fuel valve that is composed of a valve body actuated by a cam on a camshaft of a valve-actuating mechanism to open the associated gaseous fuel passage, and a return spring to restore the valve body to its closure position of the gaseous fuel passage.

In another aspect of the present invention a prechamber gas-combustion engine is disclosed wherein the auxiliary chambers are each connected to the associated main chamber through the communicating ports that extend towards the periphery of the associated cylinder. Moreover, all the compression pistons and the nozzle bodies including the fuel-discharge orifices and the compression chambers are made of ceramics.

In another aspect of the present invention a prechamber gas-combustion engine is disclosed wherein the gaseous fuel-supply means include a rotary pump for compressing the gaseous fuel fed from a gaseous fuel source, the gaseous fuel valves for supplying the gaseous fuel from the rotary pump to the compression chambers via fuel passages, the gaseous fuel valve being each controlled in open duration thereof, and a cooler disposed midway between the rotary pump and the gaseous fuel valve to cool down the compressed gaseous fuel.

In a further aspect of the present invention a prechamber gas-combustion engine is disclosed wherein the rotary pump comprises an outer shell having a gas ingress and a gas egress, a fixed casing arranged on the inner wall surface of the outer shell, the fixed casing being made of a composite material low in coefficient of friction, which consists of ceramics and fats and oils, a shaft set off-centre from the fixed casing and supported for rotation with respect to the fixed casing, a rotary casing mounted on the shaft against rotation, slots positioned at regular intervals around the rotary casing and extended radially outwardly of the rotary casing, vanes free to move in the slots and kept in an elastic contact with the inner curved surface of the fixed casing at their outermost ends, the vanes being made of a composite material low in coefficient of friction, which consists of ceramics and resins, and springs arranged in the slots so as to urge the vanes against the inner curved surface of the fixed casing.

In another aspect of the present invention a prechamber gas-combustion engine is disclosed wherein the composite material constituting the fixed casing is made of a porous ceramics impregnated with hard grease that hardens at a temperature less or equal to 100°C .

In another aspect of the present invention a prechamber gas-combustion engine is disclosed wherein the composite material constituting the vanes is made of a porous ceramics impregnated with polyethylene fluoride. The fixed casing and the vanes made of the materials described just above may help ensure the smooth, reliable rotation of the vanes with respect to the fixed casing. In addition, the porous ceramics are preferably made of any one selected from silicon carbide, silicon nitride and alumina.

According to a further aspect of the present invention, the porous ceramics of the composite materials low in coefficient of friction suitable for constituting the fixed casing and the vanes are composed of ceramics of Si₃N₄ containing iron oxide therein.

The rotary pump installed in the gaseous fuel passage may boost in pressure the gaseous fuel of 5 bars from the gaseous fuel source up to 20 to 30 bars.

According to the present invention in which the fixed casing and the vanes are composed of composite materials of porous ceramics impregnated with polyethylene fluoride or hard grease, if the ceramics were brought into ceramic-to-ceramic contact, the localized heat would created to melt lubricants such as polyethylene fluoride, hard grease or lubricating resins impregnated in the cells in the porous ceramics, which thus ooze out on the surfaces of the ceramics thereby providing a thin coating layer of lubricants between the ceramics. This is effective in diminishing the ceramics-to-ceramics contact, thereby lowering the coefficient of friction that might be encountered when the vanes slide over the fixed casing, resulting in less subject to wear.

The lubricants such as polyethylene fluoride or hard grease, although melting into liquid at an abnormal high temperature, become hard or solidify at a normal ambient temperature. Accordingly, the rotary pump made of the materials containing polyethylene fluoride or hard grease as the lubricants may absolutely keep the gaseous fuel from contaminating the lubricants. Namely, because the melting point of the polyethylene fluoride is as high as 325 °C , no melting comes into action until the fixed casing and the vanes are badly worn.

In most gas-combustion engines, a metered amount of gaseous fuel must be injected or sprayed out of the injection nozzle into the combustion chambers, overcoming the highly compressed air of 40 to 50 bars in the combustion chambers. The gaseous fuel should be thus pressurized up to a higher fuel pressure of, for example, at least 50 to 70 bars, compared with the compressed air. Nevertheless, much power is needed to intensify the gaseous fuel, which is usually a natural gas supplied from the gaseous fuel source under a relatively low pressure of 5 bars, up to the desired high pressure.

To cope with this, according to the present invention, the gaseous fuel is first compressed up to a modest pressure of 20 to 30 bars by the rotary pump and the resultant compressed gaseous fuel is then confined in the compression chamber, where the compression piston forces the compressed gaseous fuel by the cam action to thereby boost the gaseous fuel to a higher pressure of 100 to 150 bars.

In the prechamber gas-combustion engine constructed as described above, the gaseous fuel somewhat pressurized by the rotary pump is admitted into the compression chamber, where the compressed gaseous fuel may be more compressed up to a desired high pressure of, for example, 50 to 70 bars, in some cases, 100 to 150 bars by the compression piston operated by the cam-motion actuator. The compressed gaseous fuel is sprayed out of the fuel-discharge orifices of the fuel-injection nozzle into the highly compressed air in the auxiliary chamber, where the gaseous fuel is enveloped in much air and thus may be dispersed homogeneously in much air so that the combustion is initiated in the consequent mixture. As a result of continuous propagation of burning in the auxiliary chamber, gases including flames and unburned mixture blow out of the auxiliary camber into the main chamber through communicating ports, trapping no residual gaseous fuel in the auxiliary chamber. The flames entraining any unburned gaseous fuel are accelerated in mixing with fresh air in the main chamber, where the secondary combustion takes place to ensure completion of rapid combustion, resulting in enhancing the thermal efficiency with less emission of HC, NOx or the like.

Moreover, the rotary pump of the present invention may diminish in ceramic-to-ceramic contact that might occur between the relatively sliding surfaces, thus less subject to wear with resulting in ensuring durability. The rotary pump may keep the gaseous fuel from contaminating lubricating oil, thereby eliminating HC emissions due to the lubricating oil entrained in the gaseous fuel. In addition, the gaseous fuel may be easily increased up to a desired pressure by the compression piston operated by the cam-motion actuator, because the gaseous fuel is somewhat pressurized prior to admission into the compression chamber.

The prechamber gas-combustion engine according to the present invention thus has the advantage in which the gaseous fuel may continue to burn in the auxiliary chamber, where no residual gases remains, thereby ensuring the high thermal efficiency with less emission of HC, NOx or the like.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of the appended claims without departing from the scope of the invention.

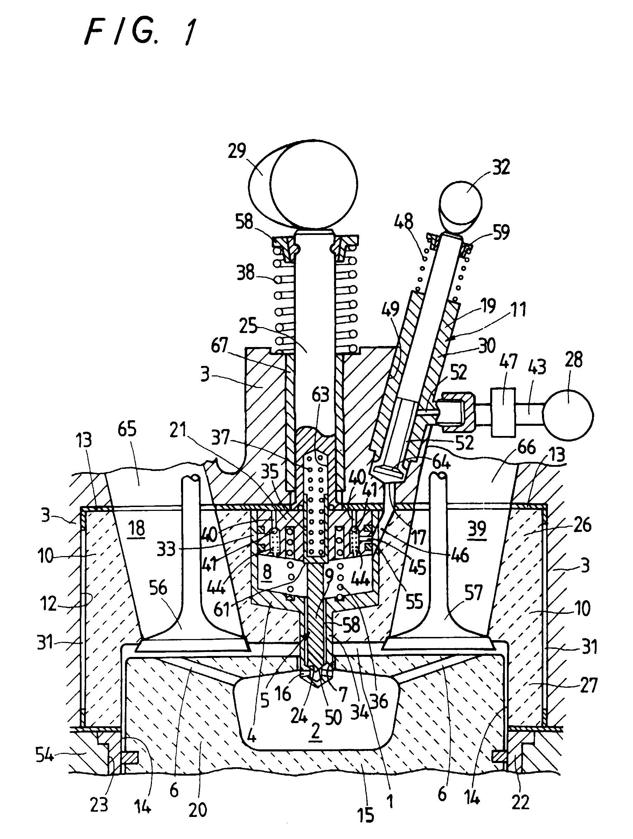

Embodiments of the present invention will now be described by way of example only, with reference to the accompanying drawings, in which:-
FIG. 1 is a fragmentary sectional view showing a preferred embodiment of a prechamber gas-combustion engine equipped with gaseous fuel-compressing means according to the present invention:
FIG. 2 is an enlarged fragmentary section view of the prechamber gasd just above may help ensure the smooth, reliable rotation of the vanes with respect to the fixed casing. In addition, the porous ceramics are preferably made of any one selected from silicon the prechamber gas-combustion engine in FIG. 1, in which a fuel-injection nozzle is at its opened position:

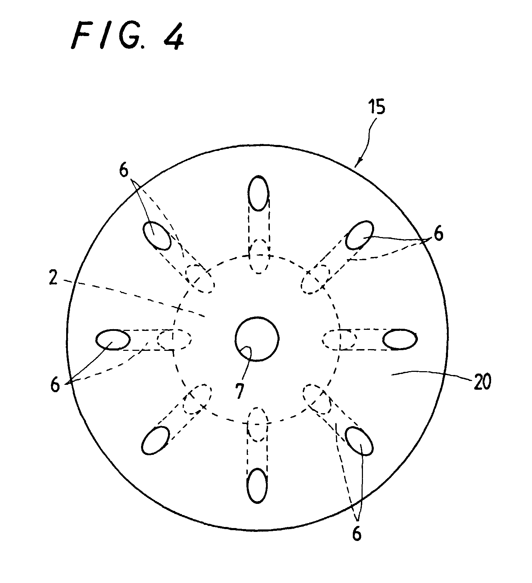

FIG. 4 is a top plan view showing a piston head in the prechamber gas-combustion engine in FIG. 1:
FIG. 5 is a cross-sectioned view showing a preferred embodiment of a rotary pump adapted to be used in the prechamber gas-combustion engine of the present invention:
FIG. 6 is a schematic perspective view showing the rotary pump in FIG. 5: and
FIG. 7 is a schematic fragmentary section of a composite member adopted in the rotary pump in FIG. 5.

The prechamber gas-combustion engine equipped with gaseous fuel-compressing means according to the present invention will be in detail explained below with reference to the accompanying drawings. The prechamber gas-combustion engine of the present invention may be adapted for, for example, cogeneration systems and automobiles.

The prechamber gas-combustion engine is comprised of a cylinder block 54, a cylinder head 3 mounted on the cylinder block 54, a cylinder liner 22 snugly fitted in a hole 23 formed in the cylinder block 54 so as to provide a cylinder 14, a combustion chamber wall 10 arranged in a cavity 12 formed in the cylinder head 3, and a piston movable reciprocally in the cylinder 14 defined by the cylinder liner 22. The combustion chamber wall 10 is of a cylinder head liner that is composed of a head lower portion 26 and a liner upper portion 27 integral with the head lower portion 26. The piston has at the center thereof an auxiliary chamber 2, or prechamber, while a main chamber 1 is provided at an area that is defined by the combination of the combustion chamber wall 10 and the piston 15.

The combustion chamber wall 10 is arranged within the associated cavity 12 in the cylinder head 3 through gaskets 13 so as to provide a heat-insulating air space 31 so that the main chambers 1 is formed in heat-insulating structure. Formed in the head lower portion 26 of the combustion chamber wall 10 are an air intake port 18 and an exhaust port 39, which are each provided with a valve seat for an intake valve 56 and an exhaust valve 57, respectively. Further the cylinder head 3 is formed therein an air intake port 65 and an exhaust port 66 communicating, respectively with the intake port 18 and the exhaust port 39 in the combustion chamber wall 10, which is made of heat-resistant materials such as ceramics, for example, Si₃N₄ or heat-resistant alloys.

The piston 15 moved reciprocally in the associated cylinder 14 has the auxiliary chamber 2 that is opened the main chamber 1 in the cylinder 14 through communicating ports 6, which are also formed in the piston head. The piston 15 is formed at the crown thereof with a center hole 7 penetrating the piston crown to the auxiliary chamber 2. When the piston 15 reaches top dead center, a fuel-injection nozzle 5 may extend through the center hole 7 into the auxiliary chamber 2. The communicating ports 6 are positioned at regular intervals around the center hole 7 and extended radially outwardly of the cylinder 14. The piston 15 is made of a piston head of heat-resistant materials such as ceramics, for example, Si₃N₄ or heat-resistant alloys, and a piston skirt, not shown, of metals such as aluminum alloy secured to the piston head 20. A gasket is interposed between the piston head 20 and the piston skirt and fixed to them by means of a coupling ring so as to provide a heat-insulating air layer.

Moreover, the cylinder head 3 has mounted with fuel-supply means including a gaseous fuel valve unit 11 and a fuel-feed nozzle for charging gaseous fuels into a compression chamber 8 in the fuel-injection nozzle 5.

The fuel-supply means in comprised of a rotary pump 28 for compressing the gaseous fuel applied from a gaseous fuel source, the gaseous fuel valve unit 11 for feeding the gaseous fuel via a gaseous fuel passage 43 from the rotary pump 28, and a cooler 47 arranged between the rotary pump 28 and the gaseous fuel valve unit 11 for cooling down the gaseous fuel.

The gaseous fuel valve unit 11 is mounted with its valve casing 30 being fitted in a matching hole 49 formed in the cylinder head 3. When opening a fuel inlet 17 of a fuel path 52 in the valve casing 30, the gaseous fuel is allowed to enter into the compression chamber 8 through the gaseous fuel valve unit 11. The fuel path 52 in the valve casing 30 is also connected through the gaseous fuel passage 43 to the rotary pump 28, which is arranged midway in the gaseous fuel passage 43 so as to compress the gaseous fuel from the fuel source. The rotary pump 28 is of a vane-type rotary compressor having an ability to compress the gaseous fuel, for example, from a low pressure of about 5 bars to a higher pressure of from about 20 to 30 bars.

The gaseous fuel valve unit 11 is composed of a valve body 64 for opening and closing the gaseous fuel path 52 under the action of a cam 32 on a cam shaft of a valve actuator, and a return spring 48 for urging the valve body 64 towards its closure position blocking the gaseous fuel path 52. The return spring 48 is disposed under compression between the valve casing 30 and a spring retainer 59, which is attached to the one end of the valve body 64.

The prechamber gas-combustion engine of the present invention includes the compression chamber 8 where the gaseous fuel is stored therein under compression to be sprayed out of a nozzle body 4 in the fuel-injection nozzle 5 into the auxiliary chamber 2, and a compression piston 21 operating so as to pressurize the gaseous fuel charged into the compression chamber 8. The compression piston 21 is equipped around the periphery thereof with piston rings 42 to seal a clearance between confronting surfaces of the compression chamber 8 and the compression piston 21. The fuel-injection nozzle 5 extends through both the combustion chamber wall 10 and the cylinder head 3, and arranged such that the combustion chamber wall 10 contains therein a radially enlarged portion of the nozzle body 4, which accommodates therein the compression chamber 8 for the fuel-injection nozzle 5. The nozzle body 4 of the fuel-injection nozzle 5 has a distal end that extends under the head lower portion 26 of the combustion chamber wall 10 and formed with fuel-discharge orifices 16 for the fuel-injection nozzle 5, which are designed in position such that they may open to the auxiliary chamber 2, passing through the center hole 7, near top dead center in the reciprocating piston.

The nozzle body 4 constituting the fuel-injection nozzle 5 has a radially enlarged cylindrical section 33 for providing the compression chamber 8 to accommodate therein the compression piston 21 for a sliding movement, and a radially reduced tubular section 34 containing therein a needle valve 9 for a back and forth movement. The radially reduced tubular section 34 is also provided at the distal end thereof with the fuel-discharge orifices 16 and a valve seat 24 against which the needle valve 9 may seat at its valve face 50. The needle valve 9 has at its distal end the valve face 50 to block off the fuel passage to the fuel-discharge orifices 16 and at its opposite end a proximal extension 35 that extends through a bore 62 in the compression piston 21 into an axial recess 63 in a piston rod 25, which may be termed push rod, so as to slide back and forth against an elastic force of a compression spring 37.

According to the fuel-injection nozzle constructed as described above, the instant the needle valve 9 is subjected at its pressure-exposed face 61 to a fuel pressure intensified in the compression chamber 8 above a preselected pressure, the needle valve 9 lifts off against the elastic force of the spring 37, thereby opening the fuel-discharge orifices 16, permitting the fuel injection out of the fuel-discharge orifices 16 into the auxiliary chamber 2 to the gaseous fuel reaching to the fuel-discharge orifices 16 from the compression chamber 8 past a fuel passage 58 defined between the needle valve 9 and the radially reduced tubular section 34.

The piston rod 25 operates the compression piston 21 against the elastic force of the return spring 36 disposed between opposing spring seats 51, 53, which are formed at the compression piston 21 and the nozzle body 4, respectively. The piston rod 25 may move back and forth along a guide member 67 under the action of a cam 29 on a camshaft of a valve actuator, and recover its home position by means of a valve spring 48. The gaseous fuel in the compression chamber 8 may leak partially out into a cavity 60, which is formed on the back of the compression piston 21 that moves downwards or pressurize the gaseous fuel with decreasing the volume available in the compression chamber 8. In order to restore the fuel leaked into the cavity 60, the compression piston is provided with check valves 41 arranged in return paths 40 communicating between the compression chamber 8 and the cavity 60. The check valves 41 are urged by return springs 44 to thereby block off the flow of gaseous fuel from the compression chamber 8 to the cavity 60. The compression piston 21 is also formed with a fuel path 45 communicating with the gaseous fuel valve 11, through which the gaseous fuel may be supplied into the compression chamber 8 on the downward movement, of the compression phase, of the compression piston 21. The fuel path 45 is shown opened to the return passage 40 midway between the check valve 41 and the compression chamber 8.

The following is to explain a preferred embodiment of a rotary pump incorporated in the prechamber gas-combustion engine according to the present invention.

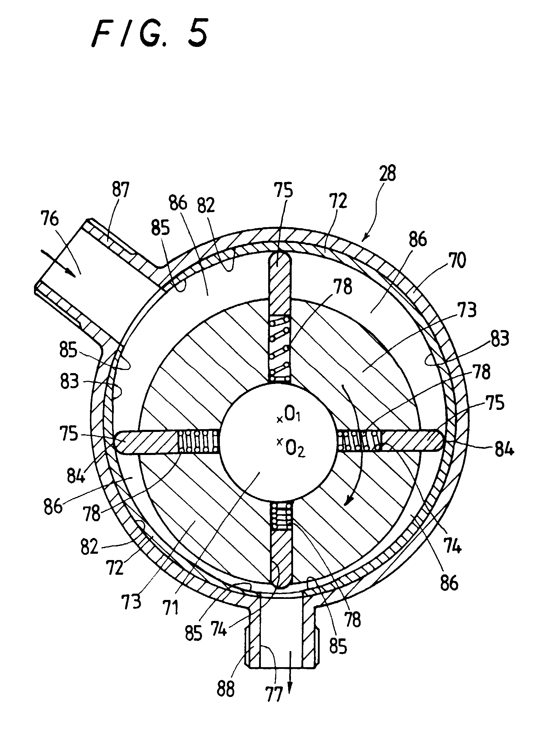

Referring to FIGS. 5 to 7, a rotary pump 28 is comprised of an outer shell 70 having an inlet port connector 87 for providing a gas ingress 76 and an outlet port connector 88 for a gas egress 77, a fixed casing 72 arranged to cover an inner surface 82 of the outer shell 70, a shaft 71 supported to the outer shell 70 for rotation about an axis O₂ set off-centre from an axis O₁ of the fixed casing 72, a rotary casing 73 united with the shaft 71 and formed with slots 74 that are positioned at regular intervals around the curved surface of the rotary casing 73 and each extended radially of the rotary casing 73, vanes 75 free to move back and forth in the slots 74 and kept at their radially outermost ends continuously in an elastic contact with an inner curved surface 83 of the fixed casing 72, and springs 78 disposed in the slots 74 so as to urge the vanes 75 against the inner curved surface 83 of the fixed casing 72. The vanes 75 each are of rectangular design extending along the axial direction of the fixed casing 72.

In the rotary pump 28 constructed as described above, since the shaft 71 is supported for rotation about its axis O₂ set off-centre from an axis O₁ of the fixed casing 72, compression spaces 86 partitioned by any two adjoining vanes 75 are provided between the fixed and rotary casings 72, 73. As the rotary casing 73 revolves, the compression spaces 86 become larger in volume at the side of the gas ingress 76, whereas smaller at the side of the gas egress 77. Moreover, the fixed casing 72 is slightly cut away nearby the gas ingress 76 and the gas egress 77 to provide relieves 85 for helping ensure smooth sliding movement of the vanes 75 and smooth suction the gaseous fuel into the compression spaces 86 at the gas ingress 76 as well as smooth discharge of the compressed gaseous fuel out of the compression spaces 86 at the gas egress 77.

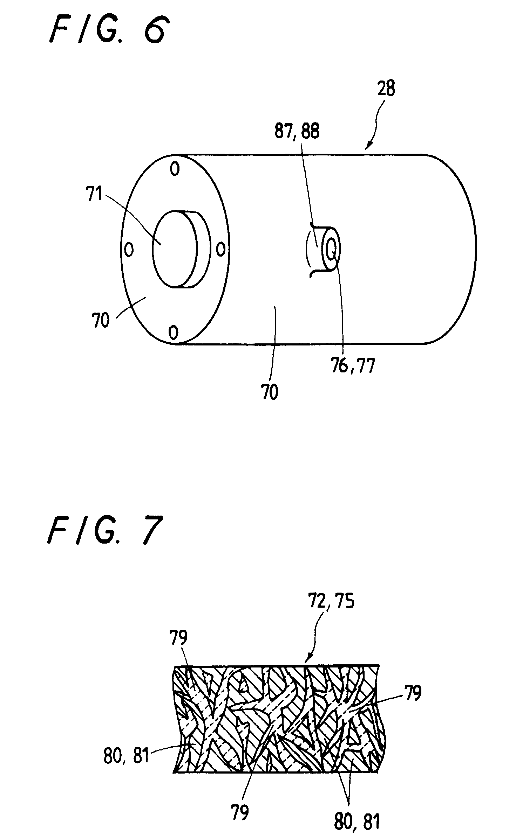

Both the fixed casing 72 and the vanes 75 are relatively moved with keeping a sliding contact with one another and thus they are made of a composite material low in coefficient of friction. Shown in FIG. 7 is an example of the composite material of low-frictional property adapted for the fixing casing 72 and the vanes 75 described above, which is composed of a porous ceramics 79 impregnated with oils and fats such as hard grease that hardens at a temperature lower than 100°C. In contrast, the vanes 75 are made of the porous ceramics 79 that is impregnated with polyethylene fluoride 80. The porous ceramics 79 are composed of any one selected from silicon carbide, silicon nitride and alumina.

As explained above, both the fixed casing 72 and the vanes 75 are coated at their sliding contact surfaces with the composite materials of porous ceramics 79 impregnated with polyethylene fluoride 80 or oils and fats. The composite materials are less subject to wear of the polyethylene fluoride as well as less subject to ceramic-to-ceramic direct contact between ceramics 79, 79 due to existence of the polyethylene fluoride 80, resulting in providing better lubricating surfaces. If the ceramics 79, 79 were brought into ceramic-to-ceramic direct contact, the localized heat would created to melt the polyethylene fluoride 80 impregnated in the cells in the porous ceramics, which thus oozes out on the surfaces of the ceramics 79, 79 thereby forming a thin coating layer of polyethylene fluoride 80, which is effective in reducing the coefficient of friction. Because the melting point of the polyethylene fluoride 80 is as high as 325 °C , no melting comes into action until any one of the fixed casingand the vanes are badly worn.

As an alternative, the fixed casing 72 and the vanes 75 may be made of porous ceramics of Si₃N₄ containing iron oxide such as Fe₃O₄ or the like and impregnated with hard grease 81, which hardens at a temperature lower than 100°C. In this case, the ceramics 79, 79 may be continuously kept in coated condition with the hard grease 81, with the result of becoming lower in coefficient in friction and thus slower to wear. Moreover, the compressed gaseous fuel may be substantially void of contaminating lubricants because the hard grease 81, although melting into liquid at an abnormal high temperature, becomes hard or solidifies at a normal ambient temperature. The rotary pump constructed as described above is thus a mostsuitable for the gas-combustion engine, likewise with high-speed vacuum pumps or rotary compressor for gaseous fuel.

The fuel path 52 in the valve casing 30 is connected through the gaseous fuel passage 43 to the rotary pump 28, which is arranged midway in the gaseous fuel passage 43 so as to compress the gaseous fuel from the fuel source. The rotary pump 28 is of a vane-type rotary compressor capable of compressing the gaseous fuel, for example, from a low pressure of about 5 bars to a higher pressure of from about 20 to 30 bars.

The prechamber gas-combustion engine constructed as described above will operates as follow.

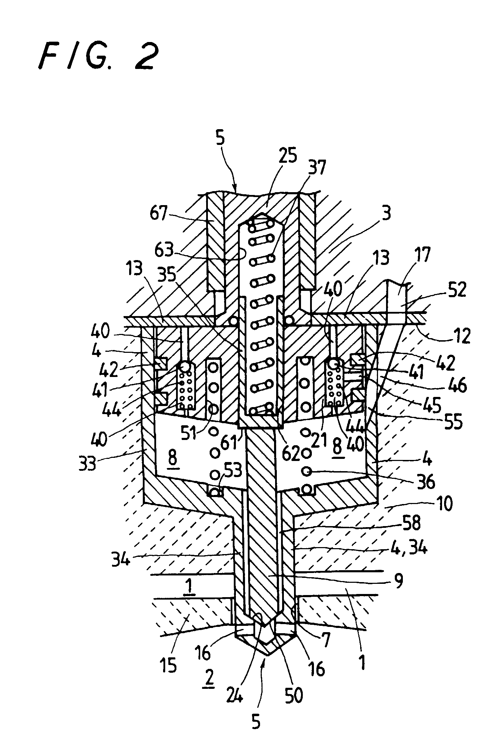

The prechamber gas-combustion engine operates on four-stroke-cycle wherein the phases of intake, compression, expansion and exhaust occur sequentially. On intake stroke the piston 15 is moving downward in the cylinder 14, the intake valve 56 has been opened with the exhaust valve 57 kept closed whereby the intake air is admitted in the main chamber 1 from a compressor or the like of a turbocharger through the intake ports 18, 65. On the other hand, the rotary pump 28 compresses the gaseous fuel of 5 bars, fed from the gaseous fuel source, up to the pressure of 20 to 30 bars and then applies the resultant compressed gaseous fuel to the gaseous fuel path 52 in the gaseous fuel valve unit 11 through the gaseous fuel passage 43, with being cooled down by the cooler 47. The instant the valve body 64 lifts off to open the gaseous fuel inlet 17, the compressed gaseous fuel is allowed to enter into the compression chamber 8 past gaseous fuel passages 46, 55. For a duration during which the compression chamber 8 is charged with the gaseous fuel, the compression piston 21 retracts as shown in FIG.2 to keep the available volume in the compression chamber 8 at its maximum. Moreover, the needle valve 9 has seated at its valve face 50 against the valve seat 24 to thereby close the fuel-discharge orifices 16. After the compression chamber 8 has accumulated the gaseous fuel, the gaseous fuel valve unit 11 blocks the gaseous fuel inlet 17 while the intake valve 56 closes the air intake port 18.

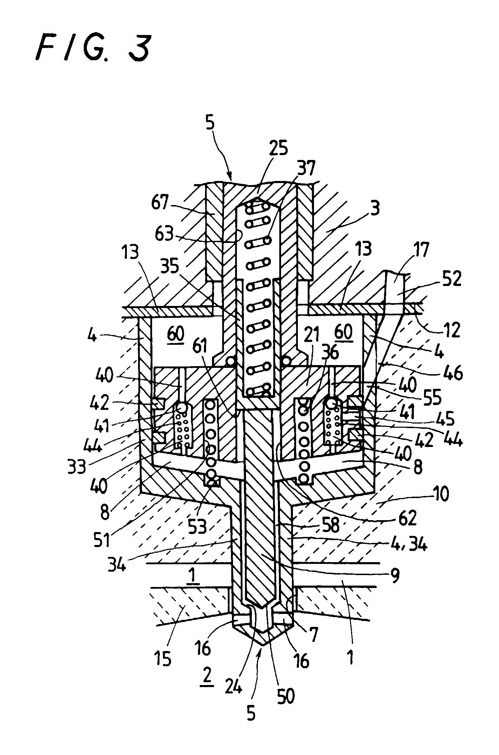

On compression strake, the piston 15 is moving upward in the cylinder, compressing the drawn air, while the cam 29 depresses the piston rod 25 so that the compression piston 21 moves downward as shown in FIG. 3, resulting in boosting the gaseous fuel of 20 to 30 bars in the compression chamber 8 up to, for example, 50 to 70 bars. Near top dead center of compression stroke, the distal end of the fuel-injection nozzle 5 penetrates through the center hole 7 in the piston 15 to the position where the fuel-discharge orifices 16 on the fuel-injection nozzle 5 are exposed in the auxiliary chamber. At this event, the needle valve lifts off by the boosted fuel pressure acting on the pressure-exposed surface 61, whereby the valve face 50 of the needle vale 9 moves off the valve seat 24 to open the fuel-discharge orifices 16. In consequence, the gaseous fuel in the compression chamber 8 is permitted to reach the fuel-discharge orifices 16 past the fuel passage 58 defined between the radially reduced tubular section 34 and the needle valve 9, then spraying out of the fuel-discharge orifices 16 into the compressed air in the auxiliary chamber 2 such that the gaseous fuel in the compression chamber 8 blows off completely into the auxiliary chamber 2 with no residual fuel remaining in the compression chamber 8. In this way, the rapid mixing and combustion take place in the auxiliary chamber 2. The gaseous fuel pressure in the compression chamber 8 disappears as a result of spraying the gaseous fuel in the compression chamber 8 into the auxiliary chamber 2, whereby the valve face 50 of the needle valve 9 seats against the valve seat 24 to block off the fuel-discharge orifices 16.

Burning of the gaseous fuel in the auxiliary chamber 2 raises the pressure in the auxiliary chamber 2, initiating the expansion stroke. Gases including flames and unburned mixture blow out through the communicating ports 6 into the main chamber 1, thereby pushing downward the piston 15. As the piston 15 is moving downward, the fuel-injection nozzle 5 retracts off the center hole 7 in the piston head 20 of the piston 15 and thus the gases including flames and unburned mixture are allowed to jet out into the main chamber 1 through the center hole 7. Any remaining gaseous fuel is burned secondarily in the main chamber 1 so that rapid combustion takes place to ensure the complete burning with less emission of NOx and HC.

On exhaust stroke starting after the piston 15 has reached bottom dead center thereof, the exhaust valve 57 has opened the exhaust ports 39, 66 through which the exhaust gaseno melting comes into action until any one of the fixed casingand the vanes are badly worn.

As an alternative, the fixed casing 72 and the vanes 75 may be made of porous ceramics of Si₃N₄ containing iron oxide such as Fe₃O₄ or the like and impregnated with hard grease 81, which hardens at a temperature lower than 100°C. In this case, the ceramics 79, 79 may be continuously kept in coated condition with the hard grease 81, with the result of becoming lower in coefficient in friction and thus slower to wear. Moreover, the compressed gaseous fuel may be substantially void of contaminating lubricants because the hard grease 81, although melting into liquid at an abnormal high temperature, becomes hard or compression piston 21. Nevertheless, as the compression piston 21 is forced upward by the elastic action of the return spring 36, the gaseous fuel in the cavity 60 pushes back the check valves 41 in return paths 40 against return springs 44 to open the return paths 40 in the compression piston 21, through which the fuel leakage may be recovered to the compression chamber 8. At this event, the gaseous fuel is supplied to the compression chamber 8 past fuel passages 46, 55 and the fuel path 45 in the compression piston 21 to build up the gaseous fuel pressure in the compression chamber, which is sufficient to assist the compression piston 21 to restore its home position, regardless of the existence of the fuel leakage into the cavity 60. Just after the compression piston 21 has reached the preset lift, the gaseous fuel is directly charged into the compression chamber 8 through the fuel passages 46, 55 till the compression chamber 8 is filled up to the preselected amount of the gaseous fuel.

While there has been described what is at present considered to be the preferred embodiment of the invention, it will be understood that various modifications may be made therein, and it is intended to cover in the appended claims all such modifications as fall within the true scope of the invention.

## Claims

1. A prechamber gas-combustion engine comprising combustion chamber members(10) arranged in a cylinder head(3) so as to constitute main chambers(1), pistons (15) movable reciprocally in cylinders(14) and formed with auxiliary chambers(2) communicating with the main chambers(1), communicating ports(6) provided between the main and auxiliary chambers(1,2), fuel-injection nozzles(5) extending out of the combustion chamber members(10) and having fuel-discharge orifices(16) that are exposed through holes(7) of the pistons(15) into the auxiliary chambers(2) near top dead center of the piston(15), compression chambers(8) formed in nozzle bodies(4) of the fuel-injection nozzles(5) to store therein and compress gaseous fuels charged, gaseous fuel-supply means for charging the gaseour fuels into the compression chambers(8), compression pistons(21) for compressing the gaseous fuel charged into the compression chambers(8), and actuating means for forcing the compression pistons(21).

2. The prechamber gas-combustion engine constructed as defined in claim 1, wherein the actuator means for forcing the compression pistons(21) are each comprised of a cam(29) mounted on a camshaft of a valve-actuating mechanism, a piston rod(25) operated under the action of the cam(29), and a return spring(36) for restoring the piston rod(25) to its home position.

3. The prechamber gas-combustion engine constructed as defined in claim 1, wherein the compression pistons(21) are each provided therein with return paths(40) communicating the associated compression chamber(8) with a cavity(60) formed on the back of the compression piston(21), the return paths(40) each containing therein a check valve(41) that opens the associated return path(40) to recover the gaseous fuel, which has leaked out into the cavity(60), to the compression chamber(8).

4. The prechamber gas-combustion engine constructed as defined in claim 1, wherein the compression pistons(21) are each provided therein with a fuel path(45) communicating with the gaseous fuel-supply means to thereby making it possible to supply the gaseous fuel during the compression piston(21) is moving downward.

5. The prechamber gas-combustion engine constructed as defined in claim 1, wherein the nozzle bodies(4) each include a radially enlarged cylindrical section(33) in which the associated compression piston (21) slides back and forth, and a radially reduced tubular section(34) in which a needle valve(9) moves back and forth.

6. The prechamber gas-combustion engine constructed as defined in claim 5, wherein the radially reduced tubular sections(34) of the nozzle bodies(4) are each provided with a valve seat(24) against which a valve face(50) of the associated needle valve(9) seats, and a distal end formed with the fuel-discharge orifices(16) that penetrate into the associated auxiliary chamber(2).

7. The prechamber gas-combustion engine constructed as defined in claim 1, wherein the needle valves(9) in the fuel-injection nozzles(5) each lift against an elastic force in response to a higher gaseous fuel pressure in the associated compression chamber(8) than a preselected pressure,

8. The prechamber gas-combustion engine constructed as defined in claim 7 wherein the needle valves(9) in the fuel-injection nozzles(5) are each provided at its one end with the valve face(24) to block off a fuel passage(58) to the fuel-discharge orifices(16) and at the opposite end thereof with an extension that extends through a hole(62) in the compression piston(21) and a recess(63) in the piston rod(25) forcing the compression piston(21) so as to make a sliding motion(35) under the elastic action of a spring(37).

9. The prechamber gas-combustion engine constructed as defined in claim 1, wherein the gaseous fuel-supply means each include a gaseous fuel valve(11) that is composed of a valve body(64) actuated by a cam (32) on a camshaft of a valve-actuating mechanism to open the associated gaseous fuel passage(52), and a return spring to restore the valve body(64) to its closure position of the gaseous fuel passage(52).

10. The prechamber gas-combustion engine constructed as defined in claim 1, wherein the auxiliary chambers(2) are each connected to the associated main chamber(1) through the communicating ports(6) that extend towards the periphery of the associated cylinder(14).

11. The prechamber gas-combustion engine constructed as defined in claim 1, wherein all the compression pistons(21) and the nozzle bodies(4) including the fuel-discharge orifices(16) and the compression chambers(8) are made of ceramics.

12. The prechamber gas-combustion engine constructed as defined in claim 1, wherein the gaseous fuel-supply means include a rotary pump(28) for compressing the gaseous fuel fed from a gaseous fuel source, the gaseous fuel valves(11) for supplying the gaseous fuel from the rotary pump(28) to the compression chambers(21) via fuel passages(43), the gaseous fuel valve(11) being each controlled in open duration thereof, and a cooler(47) disposed midway between the rotary pump(28) and the gaseous fuel valve (11) to cool down the compressed gaseous fuel.

13. The prechamber gas-combustion engine constructed as defined in claim 12, wherein the rotary pump(28) comprises an outer shell(70) having a gas ingress(76) and a gas egress(77), a fixed casing(72) arranged on the inner wall surface(82) of the outer shell(70), the fixed casing(72) being made of a composite material low in coefficient of friction, which consists of ceramics and fats and oils, a shaft (71) set off-centre from the fixed casing(72) and supported for rotation with respect to the fixed casing (72), a rotary casing(73) mounted on the shaft(71) against rotation, slots(74) positioned at regular intervals around the rotary casing(73) and extended radially outwardly of the rotary casing(73), vanes(75) free to move in the slots(74) and kept in an elastic contact with the inner curved surface(83) of the fixed casing(72) at their outermost ends, the vanes(75) being made of a composite material low in coefficient of friction, which consists of ceramics and resins, and springs(78) arranged in the slots(74) so as to urge the vanes(75) against the inner curved surface(83) of the fixed casing(72).

14. The prechamber gas-combustion engine constructed as defined in claim 13, wherein the composite material constituting the fixed casing(72) is made of a porous ceramics impregnated with hard grease that hardens at a temperature less or equal to 100°C .

15. The prechamber gas-combustion engine constructed as defined in claim 13, wherein the composite material constituting the vanes(75) is made of a porous ceramics impregnated with polyethylene fluoride.

16. The prechamber gas-combustion engine constructed as defined in claim 13, wherein the porous ceramics are of any one selected from silicon carbide, silicon nitride and alumina.

17. The prechamber gas-combustion engine constructed as defined in claim 16, wherein the composite material constituting the fixed casing(72) and the vanes(75) is of silicon nitride containing iron oxide.
